## Europäisches Patentamt
## European Patent Office
## Office européen des brevets

(19)

(11) Numéro de publication: **0 131 078**
**B1**

(12)

# FASCICULE DE BREVET EUROPEEN

(45) Date de publication du fascicule du brevet:
**28.01.87**

(51) Int. Cl.⁴: **A 01 F 15/00**

(21) Numéro de dépôt: **83401368.2**

(22) Date de dépôt: **04.07.83**

(54) **Presse à balles cylindriques avec barre de coupe incorporée.**

(43) Date de publication de la demande:
**16.01.85 Bulletin 85/3**

(45) Mention de la délivrance du brevet:
**28.01.87 Bulletin 87/5**

(84) Etats contractants désignés:
**DE FR GB IT NL**

(56) Documents cités:
**US - A - 2 597 962**

(73) Titulaire: **JOHN DEERE (Société Anonyme), 20, Rue André Dessaux, F-45401 Fleury-les-Aubrais (FR)**

(72) Inventeur: **Viaud, Jean, Chargey-les-Gray, F-70100 Gray (FR)**

(74) Mandataire: **Pruvost, Marc Henri et al, Cabinet ORES 6, Avenue de Messine, F-75008 Paris (FR)**

**Description**

La présente invention se rapporte d'une façon générale aux presses à balles cylindriques ou rondes.

Ces presses aussi dénommées ramasseuses-presses, sont d'un type général connu et comprennent un châssis équipé de roues porteuses et portant un corps de presse dans lequel sont prévues des courroies ou bandes ménageant entre elles une chambre dans laquelle une balle est formée par enroulement à partir de produits de récolte, notamment de fourrage, amenés à cette chambre par un ramasseur prévu à la partie avant et/ou inférieure de ce châssis, et une porte arrière relevable par laquelle la balle formée et liée peut ensuite être déchargée. De telles presses sont généralement attelées à un tracteur. Elles sont en conséquence utilisées pour ramasser et mettre en balles des produits de récolte ou végétaux qui ont déjà été coupés et qui reposent sur le sol, par exemple du fourrage qui est demeuré sur le sol en vue de son séchage avant sa mise en balles.

Mais, dans certains cas, les éleveurs ramassent sur le sol, au moyen de telles presses, du fourrage qui est destiné à être distribué immédiatement aux animaux au lieu d'être stocké après séchage sur le sol. Dans un tel cas, il faut, avec les presses ou ramasseuses-presses existantes, procéder d'abord à la coupe du fourrage, par exemple au moyen d'une faucheuse ou d'une faucheuse-conditionneuse, et venir ensuite ramasser le fourrage fauché ou coupé. Ceci représente, comme on le conçoit, une double opération, et en conséquence une perte de temps pour l'éleveur ou l'agriculteur.

Le but de l'invention est de remédier à cet inconvénient.

Il a déjà été proposé (US-A-2 597 962 et US-A-2 599 255) de réaliser des machines assurant au cours d'une même phase de travail la coupe et la mise en balles de fourrage ou autres produits de récolte. Toutefois, les machines divulguées par ces deux documents antérieurs sont équipées d'une barre de coupe montée à poste fixe et elles ne peuvent être en conséquence utilisées que pour un travail bien déterminé, à savoir la coupe et la mise en balles simultanées du fourrage.

Or il est important pour les éleveurs de pouvoir, pour certains types de fourrage ou d'autres produits de récolte, procéder d'abord à la coupe puis laisser ensuite le fourrage sécher sur le sol pendant un certain laps de temps avant son ramassage.

Dans ce cas, les machines divulguées par les documents cités ne permettent pas de réaliser à volonté à l'aide d'une même machine soit la coupe de fourrage et la mise en balles immédiates de fourrage vert, soit le seul ramassage de fourrage qui a été laissé sur le sol pendant un laps de temps désiré en vue de son séchage.

Le but de l'invention est également de créer une machine permettant par une modification simple et rapide de réaliser l'une ou l'autre de ces deux opérations.

L'invention concerne en conséquence une presse à balles cylindriques ou rondes du type comportant un châssis équipé de roues porteuses et formant un corps de presse dans lequel sont prévues les courroies ou bandes ménageant entre elles une chambre dans laquelle une balle est formée par enroulement à partir de produits de récolte, notamment de fourrage, amenés à cette chambre par un ramasseur prévu à la partie avant et/ou inférieure de ce châssis, et une porte arrière relevable par laquelle la balle formée et liée peut ensuite être déchargée, caractérisée en ce qu'une barre de coupe est montée amoviblement à la partie inférieure avant du châssis de la presse, devant le ramasseur, des moyens pouvant être raccordés amoviblement à des moyens d'entraînement disposés sur la presse étant prévus pour assurer l'entraînement des organes de coupe de cette barre de coupe, afin de réaliser le fauchage du fourrage et sa mise en balles au cours d'un seul et même passage de la machine à travers le champ.

Il est ainsi possible pour l'éleveur, au cours d'une même opération et à l'aide d'une seule machine, de faucher le fourrage et d'assurer sa mise en balles pour son transport immédiat ou ultérieur jusqu'au lieu désiré en vue de nourrir les animaux. L'invention combine ainsi, en une seule et même machine, les fonctions de coupe ou de fauchage et de mise en balles, avec les avantages précités de gain de temps et d'économie de travail, du fait que le fourrage coupé ou fauché est immédiatement repris par la presse pour sa mise en balles.

Il résulte également de l'invention une économie d'équipement pour l'éleveur, étant donné qu'il est possible de réaliser la barre de coupe sous une forme amovible, ce qui permet alors à l'éleveur d'utiliser une même presse à balles soit comme simple ramasseure-presse, soit comme machine composite formant une faucheuse-presse.

La barre de coupe prévue sur la machine faisant l'objet de l'invention peut être du type à lames, à disques ou de tout autre type désiré. Les organes actifs de cette barre de coupe sont alors entraînés à l'aide d'au moins un arbre depuis les organes en mouvement de la presse. Une solution paraissant avantageuse consiste à assurer cet entraînement au moyen d'un arbre s'étendant depuis le châssis de la presse jusqu'aux organes actifs de la barre de coupe, cet arbre étant entraîné lui-même de façon appropriée depuis l'arbre prévu de la manière usuelle sur les presses de ce type et relié à l'arbre de prise de force du tracteur.

La barre de coupe peut être supportée de toute manière convenable à partir du châssis de la presse. Toutefois, les organes de support sont de préférence agencés de manière à permettre un débattement vertical de cette barre de coupe par rapport à ce châssis de la presse, pour lui permettre de suivre le profil ou les inégalités du sol lors du fauchage.

Pour parvenir à ce résultat, on peut supporter par exemple la barre de coupe à partir de deux bras ou flasques latéraux montés eux-mêmes de façon pivotante sur le châssis de la presse, leur pivotement rendant ainsi possible le débattement vertical désiré de la barre de coupe. Mais il est également possible de réaliser ce montage au moyen d'un jeu de bielles ou biellettes prévues de chaque côté de la barre de coupe et formant, sur chaque côté de la presse, un parallélogramme articulé qui permet ainsi au plan de la barre de coupe de demeurer parallèle à lui-même lors du débattement vertical de cette barre de coupe pour suivre les inégalités du sol.

La barre de coupe peut comporter à sa partie inférieure par exemple des patins ou sabots reposant sur le sol et assurant ainsi son guidage en fonction du profil ou des inégalités de celui-ci, les bras ou autres éléments supportant la barre de coupe à partir du châssis de la presse permettant ce libre débattement.

Pour tenir compte du débattement vertical de la barre de coupe par rapport au châssis de la presse, l'arbre entraînant des organes actifs de la barre de coupe peut judicieusement être constitué par un arbre télescopique.

On comprend à la lecture de la description qui précède que les végétaux fauchés ou coupés sont immédiatement repris par le ramasseur de la presse et amenés à la chambre de formation de la balle de celle-ci, en combinant comme indiqué précédemment les deux fonctions de fauchage ou coupe et de formation d'une balle sur une même machine.

L'agencement de la barre de coupe peut être tel qu'il permette aux végétaux coupés ou fauchés de retomber sur le sol en arrière de la barre de coupe, pour être repris immédiatement par le ramasseur de la presse disposé derrière cette barre de coupe, ou bien, notamment dans le cas d'une barre de coupe à disques, la position de la barre de coupe devant le ramasseur peut être telle que les végétaux fauchés ou coupés soient repris directement par le ramasseur de la presse avant même de retomber sur le sol, comme cela est connu par exemple dans le cas de faucheuses-conditionneuses.

Dans un tel cas, le ramasseur usuel de la presse pourrait alors être remplacé par un convoyeur-élévateur recevant les végétaux fauchés pour leur transfert à la chambre de la presse.

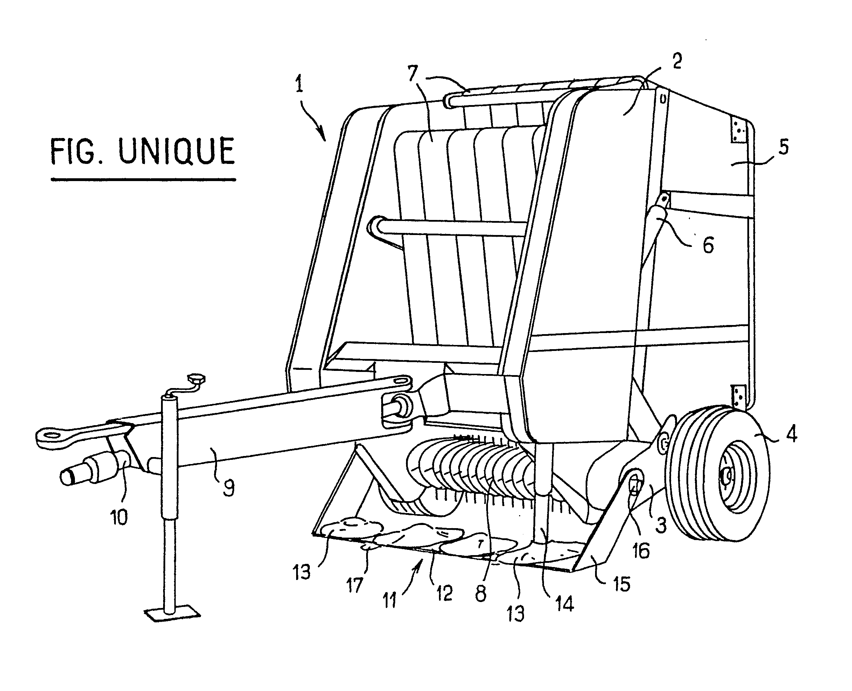

La description qui va suivre, faite en regard du dessin annexé, donné à titre non limitatif, permettra de mieux comprendre l'invention.

La Figure unique est une vue en perspective d'une presse à balles cylindriques avec barre de coupe incorporée suivant l'invention.

La presse à balles cylindriques suivant l'invention comprend un corps 1 muni d'une partie fixe 2 portée par un châssis indiqué de façon générale en 3, prenant lui-même appui sur le sol par des roues 4. Une porte arrière 5 est montée de façon pivotante à sa partie supérieure sur la partie fixe 2 du corps de la presse, pour son ouverture en vue du déchargement des balles formées. La commande de cette porte est assurée par des vérins latéraux 6. Il est prévu, à l'intérieur du corps de la presse, des jeux de bandes ou courroies 7 qui passent sur des rouleaux de renvoi et de tension pour ménager entre elles, à l'intérieur du corps de la presse, une chambre dans laquelle les produits de récolte ou végétaux sont enroulés en une balle cylindrique. La presse est équipée à sa partie inférieure d'un ramasseur 8 qui ramasse les produits de récolte ou végétaux sur le sol pour les amener à cette chambre de formation de la balle. Une flèche d'attelage 9 est prévue à la partie avant de la presse, en vue de l'attelage de celle-ci à un tracteur. Un arbre 10 destiné à être relié à l'arbre de prise de force du tracteur est conjugué à cette flèche d'attelage, et il s'étend jusqu'à l'intérieur de la presse pour assurer l'entraînement des organes mobiles de celle-ci.

Cet agencement est classique et il ne semble pas nécessaire de décrire plus en détail une presse de ce type.

Suivant le mode de réalisation de l'invention représenté, une barre de coupe désignée dans son ensemble par la référence il est prévue à la partie inférieure avant de la presse. La barre de coupe représentée comprend un corps creux 12 formant traverse, au-dessus duquel sont montés des disques de coupe 13 de type en soi connu, munis de lames de coupe.

Une barre de coupe de ce type est en soi classique. L'un des disques 13 est entraîné en rotation, dans le cas présent à partir d'un arbre 14, et les axes des ces disques pénètrent verticalement dans le corps 12 de la barre de coupe, dans laquelle sont montés des engrenages transmettant l'entraînement en rotation d'un disque à l'autre, pour assurer la rotation des disques de coupe de cette barre dans le sens requis et avec la vitesse périphérique nécessaire.

Suivant le mode de réalisation réprésenté, le corps 12 de la barre de coupe 11 est supporté à ses extrémités à partir du châssis 3 de la presse par deux bras latéraux 15 qui sont montés à pivotement sur ce châssis autour d'axes transversaux 16, afin de permettre un débattement vertical de la barre de coupe 11 par rapport au châssis de la presse. Ceci permet à la barre de coupe de suivre le profil ou les inégalités du sol, sur lequel elle peut être guidée par des patins ou sabots 17 pour assurer le fauchage des végétaux à la hauteur requise au-dessus du sol, sans que les organes de coupe pénètrent dans la terre. Pour permettre ce débattement vertical de la barre de coupe 11, l'arbre 14 est un arbre télescopique. Son extrémité supérieure pénètre dans le corps 1 de la presse, où cet arbre est relié par un renvoi d'angle (non représenté) à la partie arrière de l'arbre 10, lui-même entraîné depuis l'arbre de prise de force du tracteur. Les organes permettant cet entraînement de l'arbre 14 à partir de l'arbre 10 peuvent être en soi classiques. Leur agencement est bien connu des techniciens et il ne semble pas nécessaire ici de les décrire en détail.

Le fonctionnement et le mode d'utilisation de la machine représentée sru le dessin se comprennent aisément à la lecture de la description qui précède.

Lorsqu'un éleveur désire faucher du fourrage sur le champ en vue de son emploi immédiat pour l'alimentation du bétail, il peut réaliser le fauchage et la mise en balles au cours d'une seule et même opération ou d'un seul passage dans le champ.

Lors de l'entraînement de la machine par le trateur, la barre de coupe 11 prévue à la partie inférieure avant de cette machine va faucher les végétaux, notamment le fourrage. Comme indiqué précédemment, cette barre de coupe va, par suite de son montage sur le châssis de la presse d'une manière permettant un débattement vertical relatif, pouvoir suivre les inégalités du sol dans la partie de celui-ci est franchie par cette barre de coupe, condition nécessaire pour tenir compte du fait que, dans une machine de ce type, la barre de coupe se trouve à une certaine distance en avant des roues porteuses 4 de la machine. Comme indiqué précédemment, les organes actifs de la barre de coupe, constitués ici par les disques 13, sont entraînés à partir de l'arbre de prise de force du tracteur, par l'arbre 10 de la machine et l'arbre télescopique 14.

Les végétaux fauchés et coupés sont repris immédiatement par le ramasseur 8 de la machine et amenés directement à la chambre de formation de la balle, ou leur nappe subit de la manière usuelle un effet d'enroulement sur elle-même pour former une balle cylindrique ou ronde. Celle-ci peut ensuite être déchargée de la machine de la façon classique.

Comme indiqué précédemment, les végétaux fauchés par la barre de coupe 11 peuvent ou non retomber sur le sol avant d'être repris par le ramasseur 8, ou bien ils peuvent retomber seulement en partie sur le sol, tandis qu'une autre partie est directement entraînée par les dents du ramasseur 8 en direction de la chambre de pressage de la machine. Ce phénomène de reprise directe des végétaux coupés et/ou de ramassage peut d'ailleurs présenter un degré variant une fonction de la position en hauteur de la barre de coupe 11, qui dépend elle-même du profil du sol, mais cette variation n'affectue en aucune manière le fonctionnement de la machine, les végétaux étant chaque fois transférés directement à la chambre de formation de la balle.

## Revendications

1. Presse à balles cylindriques ou rondes (1) du type comportant un châssis (3) équipé de roues porteuses (4) et formant un corps de presse (2) dans lequel sont prévues des courroies ou bandes (7) ménageant entre elles une chambre dans laquelle une balle est formée par enroulement à partir de produits de récolte, notamment de fourrage, amenés à cette chambre par un ramasseur (8) prévu à la partie avant et/ou inférieure de ce châssis, et une porte arrière relevable (5) par laquelle la balle formée et liée peut ensuite être déchargée, caractérisée en ce qu'une barre de coupe (11) est montée amoviblement à la partie inférieure avant du châssis (3) de la presse, devant le ramasseur (8), des moyens (14) pouvant être raccordés amoviblement à des moyens d'entraînement disposés sur la presse étant prévus pour assurer l'entraînement des organes de coupe (13) de cette barre de coupe, afin de réaliser le fauchage du fourrage et sa mise en balles au cours d'un seul et même passage de la machine à travers le champ.

2. Presse à balles suivant la revendication 1, caractérisée en ce que la barre de coupe (11) est du type à lames.

3. Presse à balles suivant la revendication 1, caractérisée en ce que la barre de coupe (11) est du type à disques (13).

4. Presse à balles suivant l'une quelconque des revendications précédentes, caractérisée en ce que les organes actifs (13) de la barre de coupe (11) sont entraînés à l'aide d'au moins un arbre (14) depuis les organes en mouvement de la presse.

5. Presse à balles suivant la revendication 4, caractérisée en ce qu'un arbre (14) s'étend entre le corps (2) ou châssis (3) de la presse et les organes actifs (13) de la barre de coupe (11), cet arbre (14) étant entraîné lui-même par des moyens appropriés depuis l'arbre (10) prévu de façon usuelle sur les presses à balles et relié à l'arbre de prise de force du tracteur.

6. Presse à balles suivant l'une quelconque des revendications précédentes, caractérisée en ce que la barre de coupe (11) est supportée à partir du châssis (3) de la presse par des organes de support (15) agencés de manière à permettre un débattement vertical de la barre de coupe par rapport à ce châssis de la presse.

7. Presse à balles suivant la revendication 6, caractérisée en ce que ces organes de support de la barre de coupe (11) sont constitués par des bras (15) ou analogues reliés de façon pivotante (en 16) au châssis (3) de la presse.

8. Presse à balles suivant la revendication 6, caractérisée en ce que ces organes de support sont constitués par des bielles ou moyens analogues formant un parallélogramme articulé pour permettre le débattement vertical de la barre de coupe dans des conditions telles que son plan demeure parallèle à lui-même.

9. Presse à balles suivant la revendication 6, 7 ou 8, caractérisée en ce que l'arbre (14) d'entraînement des organes actifs (13) de la barre de coupe (11) est un arbre télescopique.

10. Presse à balles suivant l'une quelconque des revendications précédentes, caractérisée en ce que la barre de coupe (11) est disposée par rapport au châssis (3) de la presse de façon telle que les végétaux fauchés retombent sur le sol, ou soient repris par le ramasseur (8) de la presse ou un moyen équivalent formant convoyeur avant de retomber sur le sol, ou bien encore sont repris en partie par ce ramasseur ou ce moyen équivalent avant de retomber sur le sol.

## Patentansprüche

1. Presse (1) für zylindrische oder runde Ballen des Typs, der ein Chassis (3) umfasst, das mit Tragrädern (4) ausgerüstet ist und einen Körper (2) der Presse bildet, in dem Riemen oder Bänder (7) vorgesehen sind, die zwischen sich eine Kammer bilden, in der ein Ballen durch Aufrollen von Ernteprodukten, insb. Futtergut gebildet wird, das in die Kammer durch einen Aufsammler (8) eingebracht wird, der am vorderen Bereich und/oder unterhalb des Chassis vorgesehen ist, und der ein rückwärtiges anhebbares Tor (5) trägt, durch das der gebildete und gebundene Ballen nachfolgend entladen werden kann, dadurch gekennzeichnet, dass ein Schneidbalken (11) am unteren vorderen Bereich des Chassis (3) der Presse vor dem Aufsammler (8) lösbar montiert ist, und dass Mittel (14) lösbar an Antriebsmittel angeschlossen werden können, die auf der Presse angeordnet und zu dem Zweck vorgesehen sind, den Antrieb der Schneidorgane (13) des Schneidbalkens sicherzustellen, um so ein Mähen des Futtergutes und seine Überführung in Ballen im Verlauf ein und desselben Durchganges der Maschine über das Feld zu verwirklichen.

2. Ballenpresse nach Anspruch 1, dadurch gekennzeichnet, dass der Schneidbalken (11) vom Schneidklingentyp ist.

3. Ballenpresse nach Anspruch 1, dadurch gekennzeichnet, dass der Schneidbalken (11) vom Scheibentyp (13) ist.

4. Ballenpresse nach irgendeinem der voranstehenden Ansprüche, dadurch gekennzeichnet, dass aktive Organe (13) des Schneidbalkens (11) mit Hilfe wenigstens einer Welle (14) von den bewegten Organen der Presse aus angetrieben werden.

5. Ballenpresse nach Anspruch 4, dadurch gekennzeichnet, dass sich eine Welle (14) zwischen dem Körper (2) oder dem Chassis (3) der Presse und den aktiven Organen (13) des Schneidbalkens (11) erstreckt, wobei diese Welle (14) selbst durch geeignete Mittel von der Welle (10) angetrieben wird, die in üblicher Weise an Ballenpressen vorgesehen und mit der Zapfwelle des Ackerschleppers verbunden ist.

6. Ballenpresse nach irgendeinem der voranstehenden Ansprüche, dadurch gekennzeichnet, dass der Schneidbalken (11) an dem Chassis (3) der Presse mit Hilfe der Stützorgane (15) unterstützt ist, die so ausgebildet sind, dass sie eine vertikale Bewegung des Schneidbalkens in Bezug auf das Chassis der Presse gestatten.

7. Ballenpresse nach Anspruch 6, dadurch gekennzeichnet, dass die Stützorgane des Schneidbalkens (11) durch Arme (15) oder analoge Teile gebildet seind, welche schwenkbar (bei 16) mit dem Chassis (3) der Presse verbunden sind.

8. Ballenpresse nach Anspruch 6, dadurch gekennzeichnet, dass die Stützorgane durch Stangen oder analoge Mittel gebildet sind, welche ein Gelenkparallelogramm bilden, um die vertikale Bewegung des Schneidbalkens in solche Zustände zu gestatten, derart, dass seine Ebene parallel zu sich bleibt.

9. Ballenpresse nach Anspruch 6, 7 oder 8, dadurch gekennzeichnet, dass die Welle (14), welche die aktiven Organe (13) des Schneidbalkens (11) antreibt, eine Teleskopwelle ist.

10. Ballenpresse nach irgendeinem der vorstehenden Ansprüche, dadurch gekennzeichnet, dass der Schneidbalken (11) in Bezug auf das Chassis (3) der Presse derart angeordnet ist, dass die gemähten Futterteilchen auf den Boden zurückfallen, wo sie von dem Aufsammler (8) der Presse aufgenommen werden, oder von einem äquivalenten Mittel, das einen Förderer bildet, bevor sie wieder auf den Boden fallen, oder noch besser, dass sie teilweise von dem Aufsammler oder von diesen äquivalenten Mitteln aufgenommen werden, bevor sie auf den Boden fallen.

**Claims**

1. A baler (1) for producing cylindrical or round-bales, of the type comprising a frame (3) fitted with land wheels (4) and forming a baler body (2) in which are provided belts or bands (7) providing between them a chamber in which a bale is formed by winding harvested, especially forage, products brought into this chamber by a pick-up (8) provoded at the front and/or lower part of this frame, and a hinged rear door (5) through which the formed and bound bale can then be discharged, characterized in that a cutter bar (11) is mounted movably on the lower front part of the frame (3) pf the baler in front of the pick-up (8), means (14) capable of movable connection with drive means arranged on the baler being provided to ensure the actuation of the cutter members (13) of this cutter bar, so as to cut the forage and form it into bales during one and the same passage of the machine across the field.

2. A baler according to claim 1, characterized in that the cutter bar (11) is of the strip type.

3. A baler according to claim 1, characterized in that the cutter bar (11) is of the disk type (13).

4. A baler according to any one of the preceding claims, characterized in that the active members (13) of the cutter bar (11) are driven with the aid of at least one shaft (14) by the moving baler members.

5. A baler according to claim 4, characterized in that a shaft (14) extends between the body (2) or frame (3) of the baler and the active members (13) of the cutter bar (11), this shaft (14) itself being driven by appropriate means from the shaft (10) provided in the usual way on balers and connected to the power take-off shaft of the tractor.

6. A baler according to any one of the preceding claims, characterised in that the cutter bar (11) is supported on the baler frame (3) by support members (15) arranged so as to allow vertical displacement of the cutter bar relative to this baler frame.

7. A baler according to claim 6, characterized in that these support members for the cutter bar (11) consist of arms (15) or the like connected pivotally (at 16) to the baler frame (3).

8. A baler according to claim 6, characterized in that these support members consist of connecting rods or like means forming a hinged parallelogram to allow the vertical displacement of the cutter bar in conditions such that its plane remains parallel to itself.

9. A baler according to any of claims 6, 7 or 8, characterized in that the shaft (14) for driving the active members (13) of the cutter bar (11) is a telescopic shaft.

10. A baler according to any one of the preceding claims, characterized in that the cutter bar (11) is arranged in relation to the baler frame (3) in such a way that the cut vegetation falls back onto the ground, or is picked up by the baler pick-up (8) or a like means forming a conveyor before it drops back onto the ground, or even is partially picked up by this pick-up or this like means before dropping back onto the ground.

FIG. UNIQUE

0 131 078